# EUROPÄISCHE PATENTANMELDUNG

(11) **EP 2 060 427 A2**
(43) Veröffentlichungstag der Anmeldung: **20.05.2009**
(21) Anmeldenummer: 08019189.3
(22) Anmeldetag: 03.11.2008
(51) Int. Cl.: B60J 7/14, B60R 13/02

(54) **Umwandelbares Fahrzeugdach mit verstellbarem Innenhimmel**

(30) Priorität: 14.11.2007 DE 102007054663
(71) Anmelder: Webasto AG, 82131 Stockdorf (DE)
(72) Erfinder: Fladung, Uwe, 36160 Dipperz (DE)
(74) Vertreter: Konnerth, Dieter Hans

(57) **Zusammenfassung**

Die Erfindung betrifft ein umwandelbares Fahrzeugdach, das mittels einer Lagereinrichtung am Fahrzeug zwischen einer Schließstellung und einer Offenstellung verstellbar gelagert ist, in der Schließstellung mittels einer Riegeleinrichtung (8) arretierbar ist und einen Innenhimmel (12) aufweist, der zwischen einer Gebrauchsstellung, in der er seine Abdeckfunktion erfüllt, und einer Außergebrauchsstellung, in der das Fahrzeugdach bewegbar ist, verstellbar ist, wobei erfindungsgemäß vorgesehen ist, dass der Innenhimmel (12) mit der Riegeleinrichtung (8) derart gekoppelt ist, dass die Riegeleinrichtung (8) bei ihrer Verriegelungsbewegung den Innenhimmel (12) aus seiner Außergebrauchsstellung in seine Gebrauchsstellung verstellt.

## Beschreibung

Die Erfindung betrifft ein umwandelbares Fahrzeugdach, das mittels einer Lagereinrichtung am Fahrzeug zwischen einer Schließstellung und einer Offenstellung verstellbar gelagert ist, in der Schließstellung mittels einer Riegeleinrichtung arretierbar ist und einen Innenhimmel aufweist, der zwischen einer Gebrauchsstellung, in der er seine Abdeckfunktion erfüllt, und einer Außergebrauchsstellung, in der das Fahrzeugdach bewegbar ist, verstellbar ist.

Aus der EP 0 303 018 A2 ist ein Fahrzeugdach bekannt geworden, dessen Verdeckgestänge einen Außenbezug und eine Innenverkleidung trägt. Die Innenverkleidung besteht aus einem Mittelteil und zwei Seitenteilen, die jeweils über vier Halteschlaufen an einer zugeordneten seitlichen Spannstange des Verdeckgestänges längsverschiebbar angeordnet sind. Somit können sich beim Hochschwenken wie auch beim Zusammenfalten des Klappverdecks die Seitenteile an den Spannstangen in dem erforderlichen Maß verschieben, so dass eine Überdehnung oder Zerstörung der Innenverkleidung an diesen kritischen Stellen vermieden wird.

Aus der EP 1 384 610 B1 ist eine Dachkonstruktion für Kraftfahrzeuge bekannt geworden, die zumindest ein an die Karosserie des Fahrzeugs angebundenes, im wesentlichen formsteif ausgebildetes und einen Innenhimmel aufweisendes Dachelement aufweist, das von einer Außergebrauchsstellung mittels eines Lenkergestänges in eine Gebrauchsstellung überführbar ist. Dem Innenhimmel ist ein Werkstoffbereich zugeordnet, der zwischen einer das Lenkergestänge im wesentlichen verdeckenden Ruheposition und einer das Lenkergestänge zumindest teilweise freigebenden Arbeitsposition insbesondere in Dachquerrichtung verlagerbar ist. Dieser relativ zu dem Dachelement flexible Werkstoffbereich ist mittels einer mit dem Lenkergestänge verbundenen Einrichtung verstellbar, wobei eine Betätigungseinrichtung zum Verstellen des Werkstoffbereichs z. B. von einem Bowdenzug gebildet ist, der mit dem Lenkergestänge oder einer eigenen Antriebseinrichtung verbunden ist.

Der Erfindung liegt die Aufgabe zugrunde, ein eingangs genanntes Fahrzeugdach zu schaffen, das hinsichtlich der Anbringung und Anpassung des Innenhimmels an der Innenseite des Fahrzeugdachs verbessert ist.

Die Aufgabe wird bei dem eingangs genannten Fahrzeugdach dadurch gelöst, dass der Innenhimmel mit der Riegeleinrichtung derart gekoppelt ist, dass die Riegeleinrichtung bei ihrer Verriegelungsbewegung den Innenhimmel aus seiner Außergebrauchsstellung in seine Gebrauchsstellung verstellt.

Vorteilhafte Ausgestaltungen der Erfindung sind in den Unteransprüchen angegeben.

Durch die erfindungsgemäße Gestaltung kann der Innenhimmel in der Außergebrauchsstellung in eine Position gebracht werden, in der er genügend Spielraum gegenüber dem Fahrzeugdach oder Teilen davon besitzt, so dass er die Bewegung des Fahrzeugdaches in die Schließstellung und aus der Schließstellung heraus mitmachen kann, ohne dass es hierbei zu Kollisionen kommen könnte. In der Gebrauchsstellung nimmt er seine vorgesehene Abdeckstellung an der Innenseite des Fahrzeugdaches ein.

Durch die Kopplung der Verstellung des Innenhimmels an die Riegeleinrichtung ist ein eigener Antrieb zum Verstellen nicht erforderlich. Da die Riegeleinrichtung nur dann aktiviert oder betätigt wird, wenn das Fahrzeugdach geschlossen ist, wird der Innenhimmel auch nur dann in seine Gebrauchs- oder Abdeckstellung verstellt, wenn das Fahrzeugdach hierfür bereit ist. Eine Fehlbetätigung bei noch nicht geschlossenem Fahrzeugdach ist hierdurch ausgeschlossen.

Das Fahrzeugdach kann grundsätzlich ein Hardtop-Klappdach mit formsteifen Dachschalen, ein Softtop mit einem von einem Verdeckgestänge getragenen Verdeckstoff oder auch eine Mischform solcher Dächer sein und es kann bei üblichen Cabriolets mit voll versenkbarem Dach oder auch bei Fahrzeugen oder Limousinen mit einem teilversenkbaren Dach verwendet werden.

Zweckmäßigerweise ist der Innenhimmel in seine Außergebrauchsstellung vorgespannt, insbesondere mit einer Federeinrichtung. Dann zieht die an den Innenhimmel angekoppelte Riegeleinrichtung den Innenhimmel gegen den Widerstand der Vorspanneinrichtung bzw. Federeinrichtung in die Gebrauchs- oder Abdeckstellung und beim Öffnen der Riegeleinrichtung wird der Innenhimmel von der Vorspanneinrichtung bzw. Federeinrichtung zwangsläufig wieder in die Außergebrauchsstellung bewegt. Andererseits kann der Innenhimmel zumindest teilweise aus einem elastischen Material gebildet sein, wobei dann die elastischen Eigenschaften oder deren Kräfte selbst das Zurückbewegen des Innenhimmels bewirken.

Grundsätzlich kann der gesamte die Abdeckfunktion übernehmende Innenhimmel verstellt werden. Der Innenhimmel ist beispielsweise ein im wesentlichen formstabiles Bauteil, das am Fahrzeugdach bewegbar gelagert und in seiner Gesamtheit verstellbar ist. Vorzugsweise ist der Innenhimmel zumindest teilweise flexibel oder biegeweich. In seiner Gebrauchsstellung kann er gespannt sein und seine Abdeckstellung einnehmen, wohingegen er in seiner Außergebrauchsstellung zumindest teilweise entspannt ist. Wenn der Innenhimmel in seiner Außergebrauchsstellung entspannt ist, kann er sich zumindest in einem Teilabschnitt in eine Faltung legen, so dass er genügend Spielraum besitzt, um die Bewegungen des sich öffnenden und schließenden Fahrzeugdaches mitmachen zu können und dabei nicht überdehnt zu werden oder mit der Lagereinrichtung nicht zu kollidieren.

In bevorzugter Ausgestaltung enthält der Innenhimmel einen am Fahrzeugdach festgelegten Befestigungsabschnitt und einen mittels der Riegeleinrichtung relativ zum Fahrzeugdach bzw. zum festgelegten Befestigungsabschnitt bewegbaren Verstellabschnitt.

Zweckmäßigerweise ist die Riegeleinrichtung mittels zumindest eines Zug- oder Spannseils mit dem Innenhimmel bzw. dem Verstellabschnitt verbunden. Jedoch sind auch andere insbesondere zug- und drucksteife Übertragungsmittel verwendbar.

Wenn das Spannseil über zumindest eine Umlenkung zwischen der Riegeleinrichtung und dem Innenhimmel bzw. dem Verstellabschnitt geführt ist, ist eine große gestalterische Freiheit bei der Auslegung der Anordnung zur Bewegungsübertragung gegeben. Die Umlenkung ist z. B. an einem Dachbauteil oder einem Gestängeteil des Fahrzeugdaches angeordnet.

Ein derartiger bewegbarer Innenhimmel bzw. Verstellabschnitt, der insbesondere eine steife Struktur aufweist, ist zweckmäßigerweise über einen flexiblen Innenhimmelabschnitt mit einem Befestigungsabschnitt verbunden. Dabei bildet der flexible Innenhimmel in der Außergebrauchsstellung zumindest eine Falte, wodurch er beim Verstellen des Fahrzeugdaches die erforderliche Beweglichkeit bei der auftretenden Relativbewegung zwischen zwei Dachteilen aufweist.

Der Innenhimmel ist bevorzugt aus einem Stoff oder textilen Gewebe gebildet, jedoch können auch folienartige Gebilde oder ähnliche Strukturen als Innenhimmel verwendet werden. Der Innenhimmel, der auch als Innenverkleidung bezeichnet werden kann, kann an den erforderlichen Stellen eine Verstärkung oder Versteifung aufweisen.

In bevorzugter Ausgestaltung deckt der Innenhimmel eine seitliche Innenseite an der Stelle einer C-Säule eines hinteren Dachteils eines zumindest zwei Dachteile aufweisenden Hardtop-Daches ab, wobei der Innenhimmel über seinen Befestigungsabschnitt am vorderen Dachteil fixiert sein kann. Der Innenhimmel kann jedoch auch an anderen Stellen eines Hardtops oder bei einem Softtopdach verwendet werden.

Zweckmäßigerweise enthält die Riegeleinrichtung ein bewegbares Riegelteil, das das Fahrzeugdach bzw. das hintere Dachteil an der Karosserie unmittelbar oder über ein Fahrzeugbauteil mittelbar verriegelt hält und das mit dem Innenhimmel bzw. dem Verstellabschnitt verbunden ist. Dabei kann ein solches bewegbares Riegelteil der Riegeleinrichtung translatorisch und/oder rotatorisch bewegbar gelagert sein und z. B. ein Riegelhaken oder ein Riegelstift sein.

In alternativer Gestaltung kann die Riegeleinrichtung ein Antriebsteil aufweisen, das mit einem Riegelteil der Riegeleinrichtung in Antriebsverbindung ist und das mit dem Innenhimmel bzw. dem Verstellabschnitt verbunden ist, um die Verstellbewegung auszuführen.

Nachfolgend wird ein erfindungsgemäßes Fahrzeugdach anhand eines Ausführungsbeispiels unter Bezugnahme auf die Zeichnung näher erläutert. Es zeigt:
- Fig. 1: in einer perspektivischen Draufsicht in schematischer Darstellung ein Fahrzeugdach eines Cabriolet-Fahrzeugs in geschlossener Stellung;
- Fig. 2: in einer Seitenansicht in schematischer Darstellung einen Innenhimmel mit einem Verstellabschnitt in einer entspannten Stellung;
- Fig. 3: in einer Seitenansicht gemäß Fig. 2 den Innenhimmel, wobei der Verstellabschnitt über einen sich schließenden Verschlusshaken gespannt wird; und
- Fig. 4: in einer Seitenansicht gemäß Fig. 2 den Innenhimmel, wobei der Verstellabschnitt von dem geschlossenen Verschlusshaken in seine Gebrauchsstellung gespannt ist.

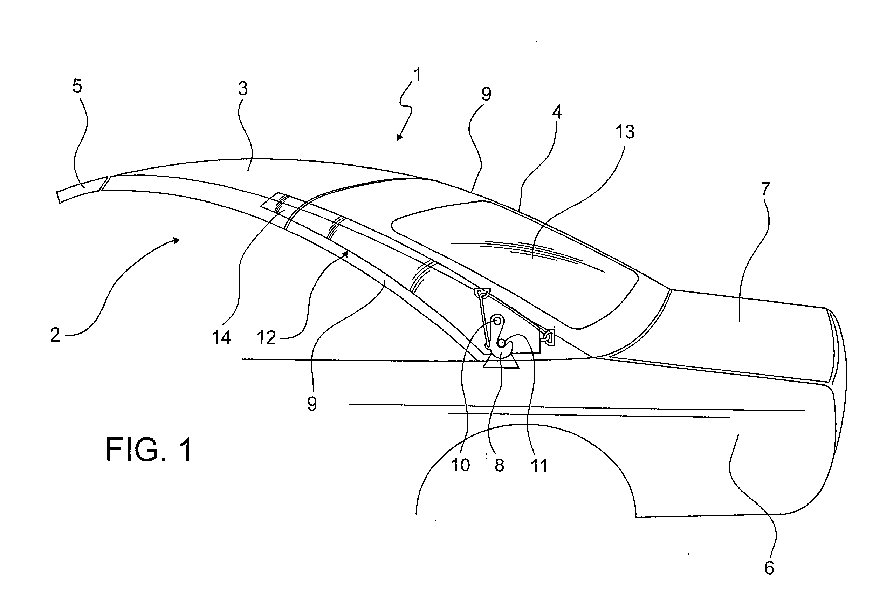

Ein umwandelbares Fahrzeugdach 1 eines Cabriolet-Fahrzeugs 2 (in Fig. 1 nur teilweise dargestellt) ist als zu öffnendes Klappdach oder Hardtop-Dach mit einem vorderen Dachteil 3 und einem hinteren Dachteil 4 gebildet und ist über eine Lagereinrichtung, die beidseits des Fahrzeugs jeweils z. B. einen Hauptlenker und eine Hauptsäule in Viergelenkanordnung aufweist, in bekannter Weise an der Karosserie beweglich gelagert und zwischen einer Schließstellung über dem Fahrzeuginnenraum, in der es an einen Windlauf 5 oberhalb der Frontscheibe anliegt, und einer Ablagestellung, in der das Fahrzeugdach 1 in einem heckseitigen Ablageraum 6 aufgenommen ist, verstellbar. Ein derartiges Fahrzeugdach ist z. B. aus der DE 44 45 580 C1 und der DE 199 64 029 C1 bekannt, bei der ebenso wie bei dem hier beschriebenen Ausführungsbeispiel das hintere Dachteil zum Öffnen des Daches über das vordere Dachteil geschwenkt wird und anschließend beide Dachteile in den Ablageraum verlagert werden.

In Schließstellung ist das vordere Dachteil 3 des Fahrzeugdaches 1 mittels einer Riegeleinrichtung an dem Windlauf 5 verriegelt gehalten. Die Riegeleinrichtung enthält z. B. zwei in Querrichtung voneinander beabstandete schwenkbare Riegelhaken, die über eine jeweilige Antriebseinrichtung betätigt werden oder deren Betätigung von dem Hauptantrieb des Fahrzeugdaches 1 abgeleitet ist und die an einem jeweiligen Gegenlager am Windlauf 5 in Eingriff kommen können. Eine derartige Riegeleinrichtung ist beispielsweise aus der DE 103 58 960 B3 bei einem dreiteiligen Klappdach bekannt.

Bei geschlossenem Fahrzeugdach 1 ist des weiteren das hintere Dachteil 4 mittels einer Riegel- oder Verschlusseinrichtung an der Karosserie oder auch an einem Verdeckkastendeckel 7, wenn es auf diesem bei geschlossenem Fahrzeugdach 1 aufliegt, verriegelt gehalten. Die Verschlusseinrichtung weist seitlich am hinteren Dachteil 4 jeweils einen Riegel- oder Verschlusshaken 8 auf, der z. B. innenseitig an einem an einer C-Säule 9 des hinteren Dachteils 4 angebrachten Träger um eine Dachquerachse 10 schwenkbar gelagert ist, zumindest bei der Bewegung des Fahrzeugdachs 1 in seine Schließstellung geöffnet ist und, wenn das hintere Dachteil 4 in seiner Schließstellung angeordnet ist, in seine Riegelstellung verschwenkt wird, wobei er ein Riegelgegenstück 11, z. B. einen karosserieseitigen Bolzen oder Zapfen, umgreift. Der Verschlusshaken 8 wird mittels eines eigenständigen Antriebs verschwenkt, der z. B. am hinteren Dachteil 4 angeordnet ist, jedoch kann der Schwenkantrieb des Verschlusshakens 8 auch von dem Hauptantrieb des Fahrzeugdachs 1 abgeleitet sein.

An der Innenseite jeder seitlichen C-Säule 9 des hinteren Dachteils 4 ist ein seitlicher länglicher Innenhimmel 12 zum Abdecken der dort angeordneten Bauteile, wie z. B. der Lagereinrichtung des Fahrzeugdachs oder der Verschlusshaken 8 mit seinem Antrieb, angeordnet. Der seitliche Innenhimmel 12, der z. B. aus einem Stoff oder Textilgewebe hergestellt ist, erstreckt sich obenseitig beispielsweise bis an den Seitenrand einer im hinteren Dachteil 4 angeordneten Heckscheibe 13. Ein vorderer im wesentlichen formsteifer Abschnitt des Innenhimmels 12, der als Befestigungsabschnitt 14 bezeichnet werden kann, ist z. B. am vorderen Dachteil 3 festgelegt, beispielsweise an Halterungen eingeclipst. Ein hinterer Abschnitt oder Verstellabschnitt 15 des Innenhimmels 12 ist über einen flexiblen Innenhimmelabschnitt 16 mit dem Befestigungsabschnitt 14 verbunden. Der Verstellabschnitt 15 kann über einen verdeckten Rahmen oder eine Verstärkung wie z. B eine dünne Schicht Schaumstoff der dergleichen versteift und damit im wesentlichen formstabil sein.

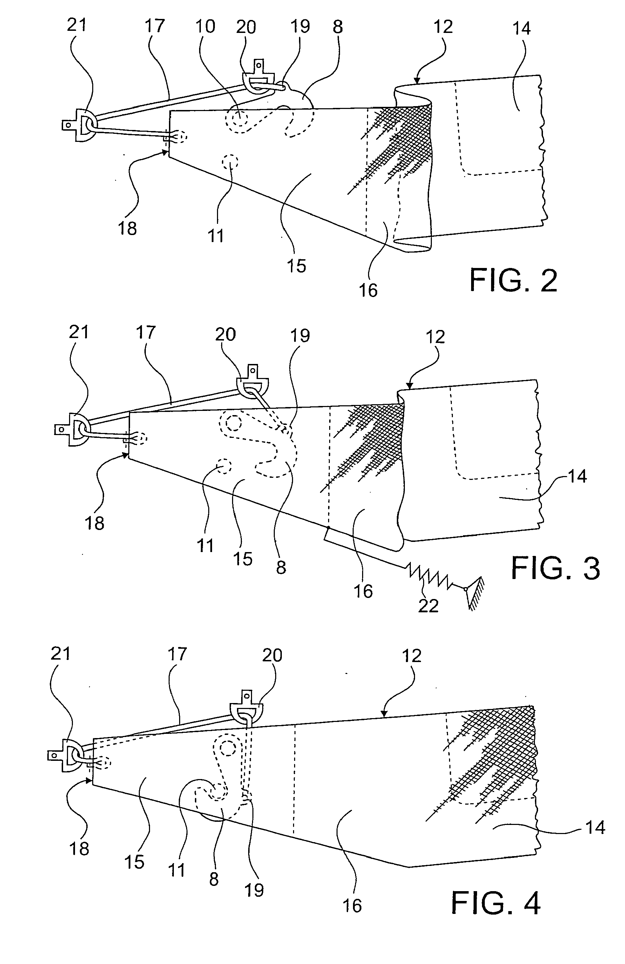

Der Verschlusshaken 8 ist über ein Zug- oder Spannseil 17 mit dem hinteren Ende 18 des Innenhimmels 12 verbunden. Das Spannseil 12 ist am Verschlusshaken 8 an einer von seiner Schwenkachse 10 entfernten Befestigungsstelle 19 angebracht und über eine erste Umlenköse 20 und eine zweite Umlenköse 21 derart zum Ende 18 des Innenhimmels 12 geführt und daran befestigt, dass beim Verschwenken des Verschlusshakens 8 aus seiner Offenstellung (siehe Fig. 2) über eine Zwischenstellung (Fig. 3) in seine Schließ- oder Riegelstellung (Fig. 4) der Verstellabschnitt 15 des Innenhimmels 12 über das Ende 18 nach hinten gezogen wird, bis der Innenhimmel 12 seine gespannte Gebrauchs- oder Abdeckstellung einnimmt. Die Umlenkösen 20 und 21 und gegebenenfalls weitere Umlenkungen sind ebenso wie der Verschlusshaken 8 an geeigneten Stellen an der Innenseite des hinteren Dachteils 4 gelagert.

Am Verstellabschnitt 15 des Innenhimmels 12 greift eine Vorspanneinrichtung 22 an (in Fig. 3 schematisch dargestellt), die den Verstellabschnitt 15 in die Außergebrauchsstellung und damit gegen die Zugrichtung des Spannseils 17 vorspannt (bezüglich des Fahrzeugdaches nach vorne). Die Spannkraft der Vorspanneinrichtung 22 ist geringer als die Zugkraft des Spannseils 17. Beim Öffnen des Verschlusshakens 8 gibt das Spannseil 17 nach und die Vorspanneinrichtung 22 zieht den Verstellabschnitt 15 wieder in die Außergebrauchsstellung zurück (Bewegung von Fig. 4 über Fig. 3 nach Fig. 2). Die Vorspanneinrichtung 22 ist z. B. eine Zugfeder oder ein gleichwertiges elastisches Bauteil. Bei einem elastischen Material des Innenhimmels 12 können die Rückstellkräfte des Innenhimmels 12 selbst die Rückbewegung veranlassen.

Beim Öffnen und Ablegen des Fahrzeugdaches 1 ist der Innenhimmel 12 in der Stellung gemäß Fig. 2. Sein ein- oder mehrfach gefalteter flexibler Innenhimmelabschnitt 16 gestattet eine Relativbewegung des vorderen Dachteils 3 relativ zu dem hinteren Dachteil 4 und insbesondere über dieses. Dabei ist genügend Freiraum zwischen dem Innenhimmel 12 und Teilen der Lagereinrichtung wie Hauptlenker und Hauptsäule vorhanden, so dass eine Beschädigung des Innenhimmels 2 vermieden werden kann.

Gemäß einem nicht dargestellten Ausführungsbeispiel ist der Innenhimmel 12 mit einem sich bewegenden Teil einer Riegeleinrichtung zum Verriegeln der beiden Dachteile 3 und 4 miteinander oder mit einer Riegeleinrichtung zum Verriegeln des vorderen Dachteils 3 am Windlauf 5 gekoppelt. Die Umlenkösen oder andere Umlenkbauteile wie gebogene Rohrstücke oder dergleichen sind dann an den erforderlichen Stellen angeordnet.

Selbstverständlich kann über eine Riegeleinrichtung auch ein Innenhimmel verstellt werden, indem ein vorderer Abschnitt oder der gesamte Innenhimmel bezüglich des Fahrzeugdaches nach vorne oder auch zur Seite hin in eine Gebrauchs- oder Abdeckstellung bewegt wird. Die Erfindung ist somit nicht auf das dargestellte Ausführungsbeispiel beschränkt. Die Bewegung des Riegelhakens bzw. allgemein des für die Bewegung verwendeten Teils der Riegeleinrichtung und die Verstellbewegung des Innenhimmels können in gleicher Richtung und in gleichen Ebenen oder auch in unterschiedlichen Richtungen und/oder Ebenen erfolgen, da die Übertragung mittels des Spannseils oder auch mittels mehrerer Spannseile eine beliebige Anpassung und Auslegung gestattet.

Grundsätzlich kann statt eines biegeschlaffen Zug- oder Spannseils auch ein drucksteifes Element zur Übertragung der Bewegung zwischen der Riegeleinrichtung und dem Innenhimmel vorgesehen sein. So kann bei Verwendung eines Bowdenzugs die Spann- wie auch die Entspannbewegung auf den Innenhimmel übertragen werden, wodurch die Vorspanneinrichtung 22 bei Bedarf entfallen könnte. Des weiteren kann auch ein Übertragungsgestänge anstatt eines Bowdenzugs verwendet werden.

### Bezugszeichenliste

- 1: Fahrzeugdach
- 2: Cabriolet-Fahrzeug
- 3: vorderes Dachteil
- 4: hinteres Dachteil
- 5: Windlauf
- 6: Ablageraum
- 7: Verdeckkastendeckel
- 8: Verschlusshaken
- 9: C-Säule
- 10: Dachquerachse
- 11: Riegelgegenstück
- 12: Innenhimmel
- 13: Heckscheibe
- 14: Befestigungsabschnitt
- 15: Verstellabschnitt
- 16: flexibler Innenhimmelabschnitt
- 17: Zug- oder Spannseil
- 18: hinteres Ende
- 19: Befestigungsstelle
- 20: erste Umlenköse
- 21: zweite Umlenköse
- 22: Vorspanneinrichtung

## Patentansprüche

1. Umwandelbares Fahrzeugdach, das mittels einer Lagereinrichtung am Fahrzeug zwischen einer Schließstellung und einer Offenstellung verstellbar gelagert ist, in der Schließstellung mittels einer Riegeleinrichtung arretierbar ist und einen Innenhimmel aufweist, der zwischen einer Gebrauchsstellung, in der er seine Abdeckfunktion erfüllt, und einer Außergebrauchsstellung, in der das Fahrzeugdach bewegbar ist, verstellbar ist,
**dadurch gekennzeichnet,**
**dass** der Innenhimmel (12) mit der Riegeleinrichtung (8) derart gekoppelt ist, dass die Riegeleinrichtung (8) bei ihrer Verriegelungsbewegung den Innenhimmel (12) aus seiner Außergebrauchsstellung in seine Gebrauchsstellung verstellt.

2. Fahrzeugdach nach Anspruch 1,
**dadurch gekennzeichnet, dass** der Innenhimmel (12) mittels einer Vorspanneinrichtung (22) und insbesondere mit einer Federeinrichtung in seine Außergebrauchsstellung vorgespannt ist.

3. Fahrzeugdach nach Anspruch 1 oder 2,
**dadurch gekennzeichnet, dass** der Innenhimmel (12) zumindest teilweise flexibel oder biegeweich ist, in seiner Gebrauchsstellung gespannt ist und in seiner Außergebrauchsstellung zumindest teilweise entspannt ist.

4. Fahrzeugdach nach Anspruch 3,
**dadurch gekennzeichnet, dass** der Innenhimmel (12) in seiner Außergebrauchsstellung zumindest teilweise unter Faltenbildung entspannt ist.

5. Fahrzeugdach nach einem der Ansprüche 1 bis 4,
**dadurch gekennzeichnet, dass** der Innenhimmel (12) einen am Fahrzeugdach (1) festgelegten Befestigungsabschnitt (14) und einen mittels der Riegeleinrichtung (8) relativ zum Fahrzeugdach (1) bzw. zum festgelegten Befestigungsabschnitt (14) bewegbaren Verstellabschnitt (15) aufweist.

6. Fahrzeugdach nach einem der Ansprüche 1 bis 5,
**dadurch gekennzeichnet, dass** die Riegeleinrichtung (8) mittels eines Spannseils (17) mit dem Innenhimmel (12) bzw. dem Verstellabschnitt (15) verbunden ist.

7. Fahrzeugdach nach Anspruch 6,
**dadurch gekennzeichnet, dass** das Spannseil (17) über zumindest eine Umlenkung (20, 21) zwischen der Riegeleinrichtung (8) und dem Innenhimmel (12) bzw. dem Verstellabschnitt (15) geführt ist.

8. Fahrzeugdach nach Anspruch 7,
**dadurch gekennzeichnet, dass** die Umlenkung (20, 21) an einem Dachteil (3, 4) oder einem Gestängeteil des Fahrzeugdaches (1) angeordnet ist.

9. Fahrzeugdach nach einem der Ansprüche 1 bis 8,
**dadurch gekennzeichnet, dass** der bewegbare Innenhimmel (12) bzw. der Verstellabschnitt (15), der insbesondere eine steife Struktur aufweist, über einen flexiblen Innenhimmelabschnitt (16) mit einem Befestigungsabschnitt (14) verbunden ist.

10. Fahrzeugdach nach Anspruch 9,
**dadurch gekennzeichnet, dass** der flexible Innenhimmelabschnitt (16) in der Außergebrauchsstellung zumindest eine Falte bildet.

11. Fahrzeugdach nach einem der Ansprüche 1 bis 10,
**dadurch gekennzeichnet, dass** der Innenhimmel (12) von einem Stoff oder textilen Gewebe gebildet ist.

12. Fahrzeugdach nach einem der Ansprüche 1 bis 11,
**dadurch gekennzeichnet, dass** der Innenhimmel (12) eine seitliche Innenseite eines hinteren Dachteils (4) eines zumindest zwei Dachteile aufweisenden Hardtop-Daches abdeckt.

13. Fahrzeugdach nach einem der Ansprüche 1 bis 12,
**dadurch gekennzeichnet, dass** der Innenhimmel (12) über seinen Befestigungsabschnitt (14) am vorderen Dachteil (3) fixiert ist.

14. Fahrzeugdach nach einem der Ansprüche 1 bis 13,
**dadurch gekennzeichnet, dass** die Riegeleinrichtung ein bewegbares Riegelteil (8) aufweist, das das Fahrzeugdach (1) bzw. das hintere Dachteil (4) an der Karosserie unmittelbar oder über ein Fahrzeugbauteil mittelbar verriegelt hält und das mit dem Innenhimmel (12) bzw. dem Verstellabschnitt (15) verbunden ist.

15. Fahrzeugdach nach einem der Ansprüche 1 bis 14,
**dadurch gekennzeichnet, dass** ein bewegbares Riegelteil (8) der Riegeleinrichtung, das insbesondere ein Riegelhaken oder ein Riegelstift sein kann, translatorisch und/oder rotatorisch bewegbar gelagert ist.
